Europäisches Patentamt

European Patent Office

Office européen des brevets

(11) Publication number: **0 429 854 A1**

# EUROPEAN PATENT APPLICATION

(21) Application number: 90120374.5

(51) Int. Cl.5: **G01B 17/02**

(22) Date of filing: **24.10.90**

(30) Priority: **28.11.89 JP 306468/89**

(43) Date of publication of application:
**05.06.91 Bulletin 91/23**

(84) Designated Contracting States:
**DE GB NL Bulletin 1**

(71) Applicant: **NKK CORPORATION**
**1-2, Marunouchi 1-chome Chiyoda-ku**
**Tokyo 100(JP)**

(72) Inventor: **Nakano, Tetsuo, c/o Patent &**
**License Dept.**
**NKK Corporation, 1-1, Minamiwatarida-cho**
**Kawasaki-ku, Kawasaki 210(JP)**
Inventor: **Katsumata, Takeshige, c/o Patent &**
**License Dept.**
**NKK Corporation, 1-1, Minamiwatarida-cho**
**Kawasaki-ku, Kawasaki 210(JP)**
Inventor: **Tanaka, Megumu, c/o Patent &**
**License Dept.**
**NKK Corporation, 1-1, Minamiwatarida-cho**
**Kawasaki-ku, Kawasaki 210(JP)**
Inventor: **Narushima, Isao, c/o K.K. Teitsuu**
**Denshi Kenkyusho**
**6-31, 2-chome, Kamishinjo, Nakahara-ku**
**Kawasaki 211(JP)**
Inventor: **Hirano, Yoshiharu, c/o K.K. Teitsuu**
**Denshi Kenkyus**
**6-31, 2-chome, Kamishinjo, Nakahara-ku**
**Kawasaki 211(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Apparatus for measuring the thickness of clad material.**

(57) The invention provides an apparatus for measuring the thickness of clad metal (2) composed of a transmitter crystal (3a) and a receiver crystal (3b) of a double crystal angle probe (3) which contact the top surface of a clad material for receiving a first echo from the top surface and a second echo from the bottom surface of the clad metal, an amplifier (5) of the echo signals, a detector (14) of the zero-crossing points of the echoes, a zero point determiner (17), a calculator (9) of the periods from the zero point to the zero-crossing points, and a caluculator (20) of the thicknesses of the clad metal.

FIG.1

## APPARATUS FOR MEASURING THE THICKNESS OF CLAD MATERIAL

The invention relates to the field of the measuring technology. The invention relates to the field of measuring the thickness of clad material. The invention relates to the field of measuring the thickness of clad metal.

Generally speaking so called "clad materials" in steel technology means clad metals wherein a base metal made of low carbon steel or low alloyed steel, hereafter mother metal, is clad by an anti-corrosive metal such as a stainless steel or a niokle base alloy, hereafter clad metal.

Generally the clad surface is metallurgically connected. The thickness of of the clad metal, hereafter clad thickness, the thickness of the mother metal, and the total thickness or the thickness of the mother metal plus clad thickness, hereafter the total thickness, should be measured and guranteed.

As for the method of measuring these thicknesses a measuring technique by an optical method is proposed wherein the end sections of a clad product are cut, polished, and observed by a microscope. Japanese Utility Models laid open 73205/1987 and 143205/1982 propose methods of measuring the thickness wherein the total thickness is measured by an ultrasonic thickness meter and the clad thickness is measured by an eddy current thickness meter, or a film thickness meter. As for the former method, for instance, when the ends of a clad material are cut, polished, and observed by a microscope, a yield loss is generated due to the cutting and a considerable time is required for the measuring.

Moreover it is impossible to measure the thicknesses of the clad material with respect to its whole length. As for the latter method, when this measuring is applied to a clad tube wherein a clad part is inserted to the inside of a mother tube, the total thickness is measured by the ultrasonic thickness meter from the outside of the clad tube, and the clad thickness is measured by the eddy current thickness meter utilizing the principle of a film thickness meter, from the inside of the clad tube. Due to the principle of the measurement the clad metal is restricted to a nonmagnetic one. To carry out the measurement, a sensor of the eddy current thickness meter should be inserted into the clad tube which requires a considerable facility with a considerable controlling mechanism. In the measuring operation the insertion and taking out of the sensor require a considerable time. Especially when a long clad tube is measured by this device, the mechanism for the inserting and the positioning of the sensor requires a considerable facility and the positioning is so difficult that the disecrepancy of the measured points between the sensor of the eddy current thickness meter and that of the total thickness meter needs to be corrected.

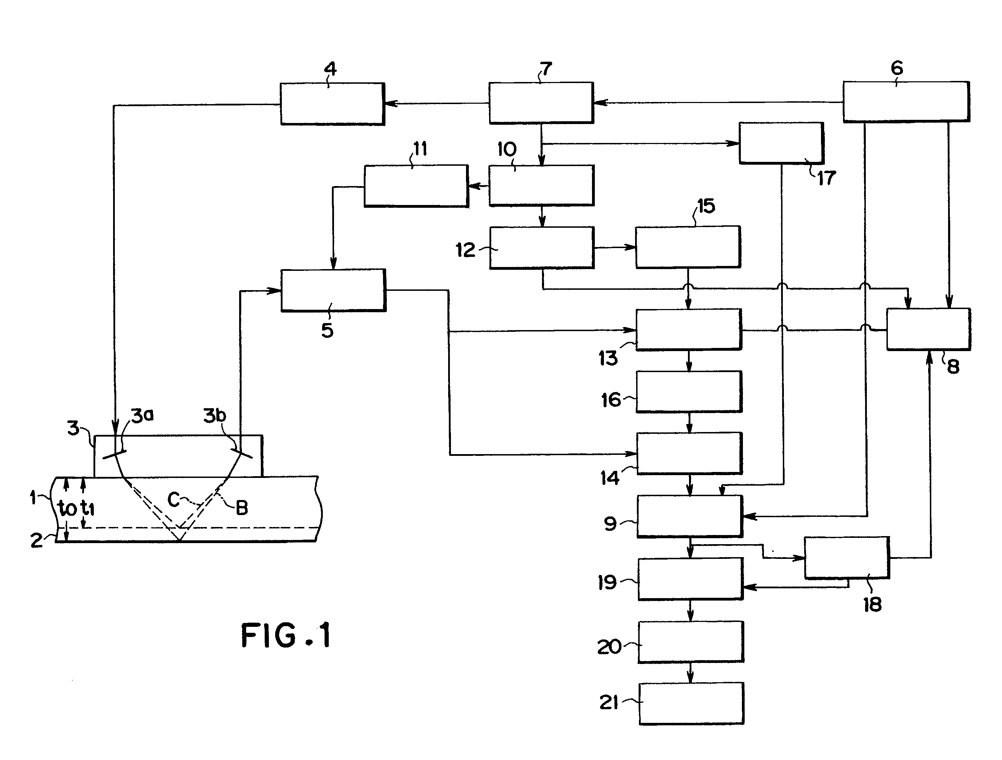

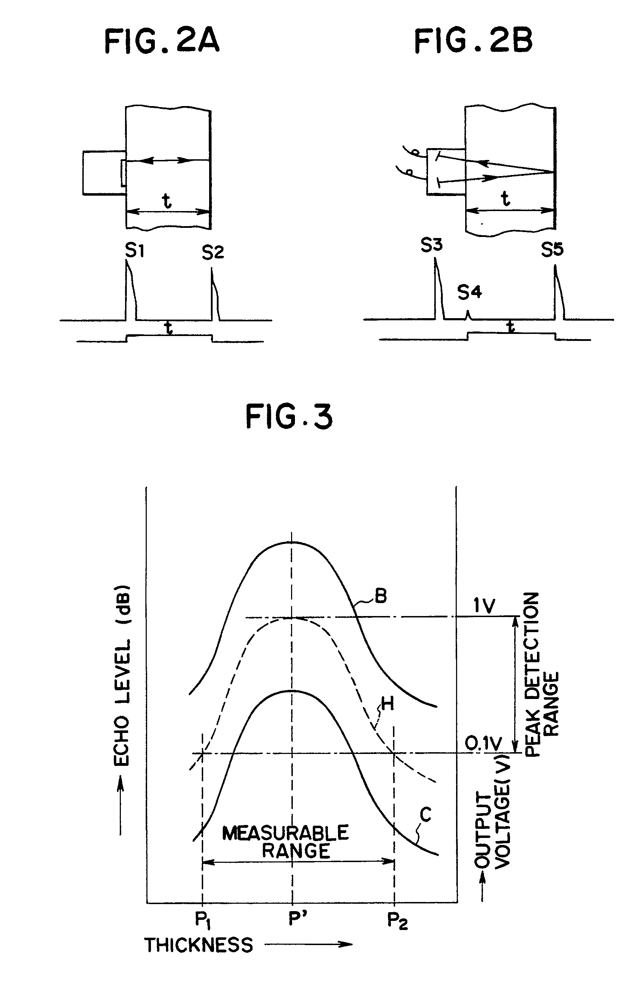

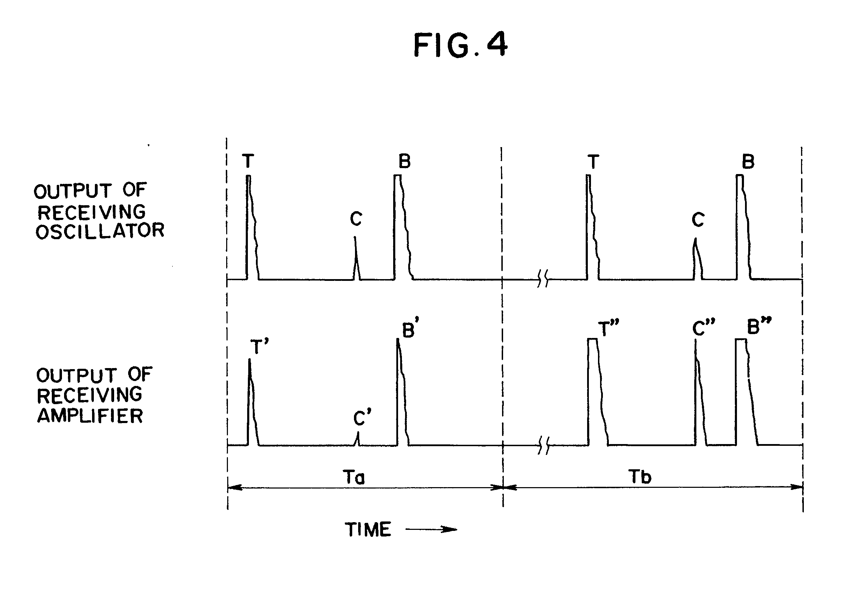

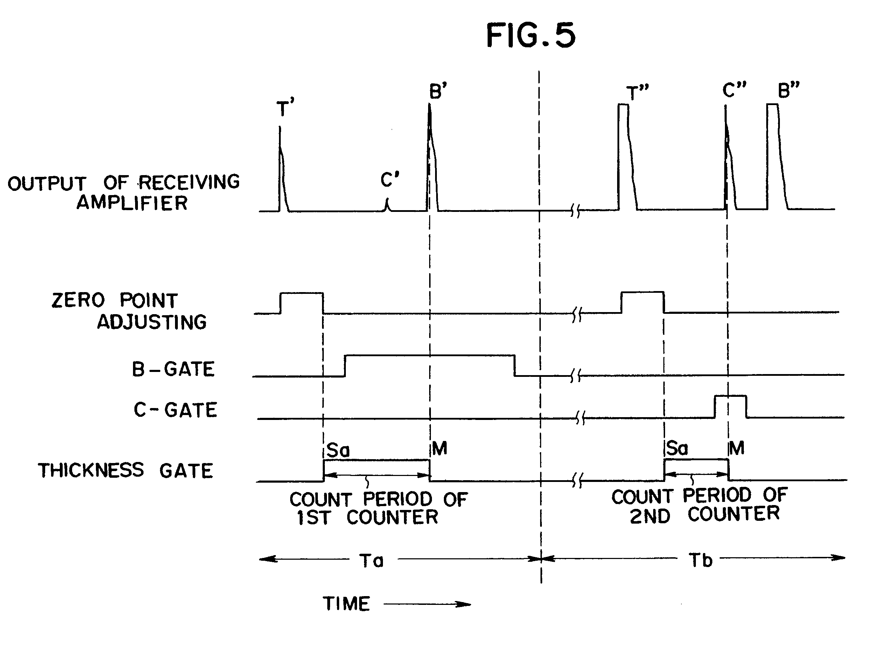

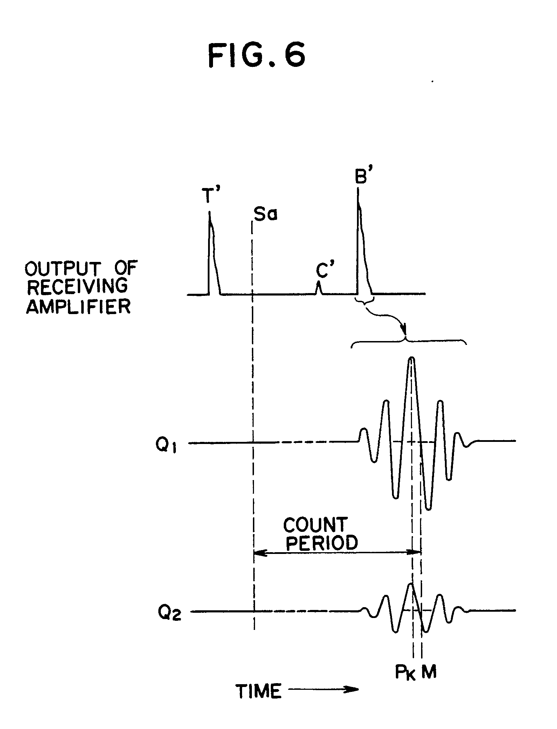

Figure 1 is a flow chart of an embodiment of the invention. Figure 2A and 2B are explanatory views of conventional ultrasonic thickness meters utilizing compression wave. Figure 3 is graphes wherein the variable range of amplitude level is illustrated. Figure 4 is the signal pattern before and after the amplification. Figure 5 is graphes which show the timing chart of the measurement of the total and clad thicknesses. Figure 6 is graphes wherein the zero crossing point is shown.

It is an object of the present invention to provide an apparatus for measuring the thickness of clad material. It is an object of the present invention to provide an apparatus for measuring the thickness of clad metal. It is an object of the present invention to provide a non-destructive measuring apparatus whereby the thicknesses can be measured with high accuracy and high responsiveness, especially of a clad tube.

The present invention provides an apparatus for measuring the thickness of clad metal comprising:

a transmitter crystal of a double crystal angle probe for radiating an ultrasonic beam which contacts the top surface of a clad material consisting of a clad metal and a mother metal on top of said clad metal;

a receiver crystal of said double crystal angle probe which contacts the top surface of said clad material for receiving a first echo of said ultrasonic beam from the top surface of said clad metal and a second echo thereof from the bottom surface of the clad metal;

means for amplifiing of said first echo with a first amplitude, and of said second echo with a second amplitude,

means for detecting the time when the amplified signal of the first echo reaches the first zero-crossing point after the peak of the first echo and the time when the amplified signal of the the second echo reaches the first zero-crossing point after the peak of the second echo;

means for determining a zero point of time when the ultrasonic beam incides the top surface of the mother metal;

means for calculating a first period from said zero point to the first zero-crossing point of the first echo and a second period from the zero point to the first zero-crossing point of the second echo; and

means of calculating the thickness of the clad metal and the total thickness of the clad material using said first period and said second period.

The present invention provides another apparatus for measuring the thickness of clad material

3

comprising:

a transmitter crystal of a double crystal angle probe for radiating an ultrasonic beam which contacts the top surface of a clad material consisting of a clad metal and a mother metal on top of said clad metal;

a receiver crystal of said double crystal angle probe which contacts the top surface of said clad material for receiving a first echo of said ultrasonic beam from the top surface of said clad metal and a second echo thereof from the bottom surface of the clad metal;

means for time sharing which generates a first time sharing signal when the first echo reaches said receiving crystal and a second time sharing signal when the second echo reaches the receiving crystal;

means for amplifiing of said first echo with a first amplitude, and of said second echo with a second amplitude, said first amplitude and said second amplitude being alternated upon receiving said first time sharing signal and said second time sharing signal;

means for gating the amplified signal of the first echo and the amplified siganl of the second echo;

means for detecting the time when the gated signal of the first echo reaches the first zero-crossing point after the peak of the first echo and the time when the gated signal of the second echo reaches the first zero-crossing point after the peak of the second echo;

means for determining a zero point of time when the ultrasonic beam incides the top surface of the mother metal;

means for calculating a first period from said zero point to the first zero crossing point of the first echo and a second period from the zero point to the first zero crossing point of the second echo; and

means of calculating the thickness of the clad metal and the total thickness of the clad material using said first period and said second period.

As for the product of the clad meral, a clad tube is a good target of the invented apparatus since the measurement is difficult from the inside of the tube.

As the material of the mother metal, low carbon steel or low alloy steel are widely used. As the material of the clad metal, stainless steel, nickel base alloy, and titanium base alloy are widely used.

The material of the crystal the following is the most favorable condition for the measurement of clad materials:

(1) zirconium titanate series porcelain for the transmitting crystal and the receiver crystal;

(2) piezoelectric porcelain for the transmitting crystal and the receiver crystal;

(3) zirconium titanate series porcelain for the transmitting crystal and piezo electric porcelain for the receiver crystal;

The dimension of the probe is the most favorable in case that the height is 5 mm and the width is 10 mm, or that the height is 10 mm and the width is 10 mm.

The angle of the refraction ranges from $35°$ to $70°$.

In case that the thickness of the clad metal is above 10 mm, this range is from $35°$ to $50°$.

In case that the thickness of the clad metal is below 10 mm, this range is from $50°$ to $75°$.

The range of the frequency utilized in this invention is from 2 to 10 MHz

The coupling methods for acousticaly coupling the probe and the measured body are the contact method and the water column coupling method.

In case of the measurement of a clad tube, the following are the conditions of the scanning:

(1) The double crystal angle probe is stationary and the tube is spirally moved;

(2) The tube moves straight and the double crystal angle probe is rotated.

Figure 1 is a flow chart of an embodiment of the invention. The clad metal 2 is clad on the mother metal 1. The double crystal angle probe is contacted to the top surface of the mother metal 1. The reason of adopting the double crystal angle probe is explained below.

Figure 2A and 2B are explanatory views of conventional ultrasonic thickness meters utilizing compression wave. Figure 2A shows a single probe technique and Figure 2B shows a double probe technique. Both Figures show the schematic views of the path of the sonic beam, at the top, signal pattern of the echo signal, at the middle, and the signal pattern of the the detection gate which is set to detect the echo from the boundary of the mother metal and the clad metal, hereafter the clad surface, at the bottom. In case of the single probe technique of Figure 2A the clad thickness is obtained by the time interval between the transmitting of the transmitting pulse $s_1$ and the receiving of the back echo $s_2$. In case of the double probe technique of Figure 2B the clad thickness is obtained by the time interval between the receiving of the surface echo $s_4$ and bottom echo $s_5$ after the transmitting pulse $s_3$ is transmitted. Both method utilize the compression waves. As a method of utilizing shear wave a normal probe of a Y cut crystal transducer utilizing the shear wave is well known. However due to the restriction of a contacting media consisting of a liquid wherein the shear wave cannnot be transmitted, the automatic measurement in use of the liquid media is not possible.

The sonic pressure reflective coefficient from the clad surface is given by the following equations.

$$r_{12} (\%) = P_r / P_1$$
$$= ( Z_2 - Z_1 ) / ( Z_1 + Z_2 )$$
$$Z_1 = \rho_1 \cdot c_1$$
$$Z_2 = \rho_2 \cdot c_2 ,$$

wherein $\rho_1$ and $\rho_2$ are the density of the material, $c_1$ and $c_2$, the sonic velocity of the material, and $Z_1$ and $Z_2$, the acoustic impedance.

Table 1 shows the sonic pressure reflective coefficient of the material calculated from the accoustic impedance thereof. As reported in Table 1, the sonic pressure reflective coefficient of the clad surface is high in case of the shear wave compared with the compression wave. Actually the level of the echo is recognizable in case of the shear wave but the level is too low to be differentiated with noise in case of the compressional wave.

## Table 1

| Kinds of Clad Metals | Shear Wave | Compression Wave |
|---|---|---|
| Nickel Alloy Clad I | 1.8 % | - 0.5 % |
| Nickel alloy clad II | 1.6 % | 0.4 % |
| Stainless Steel Clad I | 1.5 % | 1.0 % |
| Stainless Steel Clad II | 1.2 % | 0.6 % |

Following the aforementioned information, in this invention, the shear wave is utilized which is generated by a double crystal angle probe, wherein the echo at the clad surface is comparatively large and the echo at the clad surface can be recognizable by a calculating means whereby the thickness of the mother metal and the total thickness can be measured. The difference between the above two thicknesses is the clad thickness. This is the point of the invention.

The double crystal angle probe 3 in Figure 1 is equipped with the transmitter crystal 3a and the receiver crystal 3b and the distance between the points of incidence thereof are determined by the thickness of the metal to be measured in case of the angle of the refraction is in the range of 35 ° ~ 70 ° .

In this embodiment the angle of refraction is set at 38 ° . The depth of the focus of the ultrasonic beam is determined by this distance and the level of the echo varies with the depth. The transmitter crystal 3a is connected to the transmitter 4, and the receiver crystal 3b is connected to the receiving amplifier 5.

The clock generator 6 generates the clock signal for measuring the ultrasonic path length is transmitted to the timing clock 7, C gate generator 8, and the counter 9.

The timing clock 7 receives the clock signal and transmits the timing signal of transmission to the transmitter 4 and the time sharing controller 10.

The transmitter 4 receives the timing signal of transmission and genarates an ultrasonic pulse so that the transmitter crystal 3a generates an ultrasonic beam. The time sharing controller 10 receives the timing signal of transmission from the timing clock 7, generates the time sharing signal at the timing wherein the receiver crystal 3b receives the echo from the clad surface C, hereafter the clad echo, and the echo from

5

the bottom of the clad metal B, hereafter the total echo, and transmits the timing signal to the amplitude controller 11 and the gate controller 12.

The amplitude controller 11 receives the timing signals, alternates the amplitude responsive to the total echo B and the clad echo C. The receiving amplifier 5 amplifies the signals of the total echo B and the clad echo C in accordance with the alteration so that the level of the two signals agree. Figure 3 is graphes wherein the variable range of amplitude level is illustrated. The abscissa denotes the thickness of the metals and the ordinates denote the echo level and the output voltage. The curve B denotes the total echo B, the curve C, the clad echo C, and the curve H, or the amplified signal pattern of the curves B and C. At the thickness P ' , the curves B, C, and H have their optimums.

As shown in Figure 3, there is a difference between the level of the total echo B and that of the clad echo C. The signal pattern of the echo B and the signal pattern of the echo C are changed to the signal pattern H by the receiving amplifier 5 with the alteration of the amplitude.

The level of the signal pattern H is in the range of 0.1 ~1 volt which is easy to process in electronic circuits . The amplified outputs from the receiving amplifier 5 are transmitted to the gate selector 13 and the zero-crossing detector 14.

The gate controller 12 receives the time sharing signal from the time sharing controller 10 and transmits the control signal whereby the B gate generator generates the B gate signal at the timing when the receiving crystal 3b receives the the total echo B, and the control signal whereby the C gate generator generates the C gate signal at the timing when the receiving crystal 3b receives the the clad echo C.

These B gate signal and the C gate signal are inputted to the gate selector 13. The gate selector 13 transmits the part of the amplified signal from the receiving amplifier 5, corresponding with the total echo B, to the peak detection circuit 16 when the gate selector 13 receives the B gate signal. The gate selector 13 transmits the part of the amplified signal from the receiving amplifier 5, corresponding with the clad echo C, to the peak detection circuit 16 when the gate selector 13 receives the C gate signal.

The peak detecting circuit 16 detects the peak of the amplified output which is inputted from the receiving amplifier 5 through the gate selector 13 and transmits the detected signal to the zero-crossing detecting circuit 14. The zero-cross detecting circuit 14 receives the detected signal from the peak detecting circuit 16, detects the zero-crossing points of parts of the amplified signals corresponding with the echo B and the echo C from the receiving a mplifier 5, and transmits the detected signal to the counter 9.

The counter 9 counts the clock signal generated by the clock generator 6 wherein the counting starts when the counter 9 receives the zero signal generated by the zero adjustment unit 17 and ends when the counter 9 receives the detected signal from the zero-crossing detecting circuit 14.The zero point signal is generated by the zero adjustment unit 17 when the ultrasonic beam generated by the transmitter crystal 3a is radiated at the clad surface towards the inside of the clad metal 2. The counted value from the counter 9 is transmitted to the memory 18 and the clad thickness calculator 19.

The clad thickness calculator 19 calculates the difference between the 1st. calculating value which corresponds to the zero-crossing point of the amplified signal of the total echo B and the 2nd. calculating value which corresponds to the zero-crossing point of the amplified signal of the clad echo C, and transmits the calculated value to the sonic velocity calculator 20.

The sonic velocity calculator 20 calculates the thickness of the clad metal 2 by multipliing the difference between the 1st. calculating value and the 2nd. calculating value, by the sonic velocity of the clad metal 2, and transmits the calculated result to the display 21.

The function of the invented apparatus is explained as follows.

The clock generator 6 generates the clock signal at a certain interval, which is transmitted to the timing clock generator 7, the C-gate generator 8, and the counter 9. The timing clock generator 7 receives the clock signal and transmits a timing signal for transmission to the transmitter 4 and the time sharing controller 10.

The transmitter 4 receives the timing signal for transmission and transmits a transmission pulse signal to the transmitting crystal 3a of the double crystal angle probe 3, whereby the transmitting crystal 3a radiates the ultrasonic pulse beam " T " to the mother metal 1. The radiated ultrasonic beam propagates in the mother metal 1, reaches the clad surface wherein a part of the beam is reflected as the clad echo C and the other part of the beam passes through the clad surface, reaches the bottom of the clad metal, and is reflected by the bottom surface as the total echo B. These echo B and echo C are incided to the receiving crystal 3b.

The receiver crystal 3b generates the electric signal, the size of which corresponds to the level of the clad echo C and the total echo B, after the incidence of the echo B and the echo C to the receiver crystal 3b. These signals are amplified by the receiving amplifier 5 and transmitted to the gate selector 13 and the zero-crossing detecting circuit 14.

EP 0 429 854 A1

The time sharing controller 10 receives the timing signal for transmission from the timing clock generator 7 and generates the time sharing signal at the timing when the receiving crystal 3b receives the signal of the total echo B and the clad echo C, and the time sharing signal is transmitted to the amplitude controller 11 and the gate cotroller 12. The amplitude controller alternates the amplitude of the amplifier 5 in correspondence with the timing wherein the receiving crystal 3b receives the signals of the total echo B and the clad echo C.

Figure 4 is the signal pattern before and after the amplification. The upper part of Figure 4 shows the signal pattern as the output of the receiver crystal 3b, or the output of the receiving oscillator, wherein the amplifier 5 does not alternate the amplitude by the amplitude controller 11. In this case the level of the signal of the echo B and the echo C in Figure 4, corresponds with the signal level of the echo B and the echo C in Figure 3 at the thickness of P'. The lower part of Figure 4 shows the output of the receiving amplifier, or the amplified signal patterns of the echo B and the echo C wherein the receiving amplifier 5 alternates the amplitude by the signal from the amplitude controller 11. As shown in Figure 4, the amplitude of the receiving amplifier 5 is alternated to the value for the total echo B in the period $T_a$, wherein the level of the echo B is alternated to the level of H in Figure 3. As the result of this amplification, the signals of the transmitting T, the total echo B, and the clad echo C are transformed to T', B', and C' respectively in the period of $T_a$. As shown in Figure 4, the amplitude of the receiving amplifier 5 is alternated to the value for the clad echo C in the period $T_b$, wherein the level of the echo C is alternated to the level of H in Figure 3. As the result of this amplification, the signals of the transmission T, the total thickness echo B, and the clad echo C are transformed to T", B", and C" respectively in the period of $T_b$. The time shaing signal is generated by the time sharing controller 10 and transmitted to the B gate generator 15 and the C gate generator 8 via the gate controller 12.

Figure 5 is graphes which show the timing chart of the measurement of the total and clad thicknesses. The abscissa denotes time. The top curve shows the output of the receiving amplifier, or the amplified signal. The second curve shows the level of the zero point adjusting. The third curve shows the level of the B gate. The fourth curve shows the level of the C gate. The fifth curve shows the level of the thickness gate.

As illustrated in Figure 5, the B gate generator 15 transmits the B gate signal to the gate selector 13 during high level time of the B gate in the period of $T_a$ wherein the total echo B' and the clad echo C' are included. The total echo B' and the clad echo C' are transmitted to the peak detecting circuit 16 via the gate selector 13. The B gate generator becomes high level in the thickness range from $P_1$ and $P_2$ in Figure 3.

The peak detecting circuit 16 detects the peaks of the electric signal of the total echo B' and the clad echo C' inputted through the gate selector 16.

Actually the output of the receiving amplifier 5 is an radio frequency wave. The outputs of the receiving amplifier 5 are shown in the simplified pattern of a detected wave in Figures 2, 4, and 5.

Figure 6 is graphes wherein the zero-crossing point is shown. The abscissa denotes time. The top curve shows the output of the receiving amplifier 5. The middle curve and the bottom curve show the radio frequency wave patterns of the total echo B.

As shown in Figure 6, the radio frequency wave pattern of the detected wave of the receiving amplifier 5 are denoted as $Q_1$ and $Q_2$ as for the total echo B. The wave patterns $Q_1$ and $Q_2$ are enlarged as for the time direction.

The wave pattern $Q_1$ is in the state of high level of which peak corresponds with the value of the echo level of the curve H of Figure 3 at the thickness value of P' which is 1 volt as for the output voltage. The wave pattern $Q_2$ is in the state of low level of which peak corresponds with the value of the echo level of the curve H of Figure 3 at the thickness values of $P_1$ and $P_2$ which is 0.1 volt as for the output voltage. The curve H is the amplified echo B' which is the amplified signal of the total echo B, and also is the amplified echo C" which is the amplified signal of the total thickness echo C. Figure 6 shows the radio frequency wave pattern of the B' echo in the period of $T_a$ the wave pattern of which is analogous to the C" echo in the period of $T_b$. The peak detecting circuit 16 detects $P_k$ as the peak time, and transmits the value to the zero-crossing detecting circuit 14 which detects the zero crossing time M. As shown in Figure 6, the time M for both wave patterns $Q_1$ and $Q_2$ is the same irrespective of the difference of the levels, which leads to the accurate measurement of the time.

The zero-crossing detecting circuit 14, upon receiving the peak detecting signal, starts detecting the zero-crossing point of the output of the receiving amplifier 5 and transmits the detected signal of the zero-crossing to the counter 9.

The counter 9 has been counting the clock signal since it receives the zero point signal from the zero-adjustment unit 17 until the zero-crossing signal is inputted to the counter 9. The time $S_a$ when the counter 9 receives the zero point signal corresponds with the time when the ultrasonic beam by the transmitter crystal 3a incides at the surface of the mother metal 1. The 1st. counted value corresponds with the time

7

from the time $S_a$ to the time when the zero-crossing signal is inputted to the counter 9. The 1st. counted value is temporarily stored in the memory 18.

The C gate signal which becomes high level during the time including the clad echo C" in the period of $T_b$, is generated at the C gate generator 8 in response to the time sharing signal from the time sharing controller 10. When the C gate signal is transmitted to the gate selector 13, the clad echo C" is transmitted to the peak detecting circuit 16 via the gate selector 13.

The peak detecting circuit 16 detects the peak of the elecric signal of the clad echo C" and transmits the signal to the zero-crossing detecting circuit 14. The zero-crossing detecting circuit, upon receiving the peak signal, starts detecting the zero-crossing point of the output of the receiving amplifier 5 and the detected signal of the zero-crossing point is transmitted to the counter 9.

The counter 9 has been counting the clock signal since it receives the zero point signal from the zero-adjusting unit 17 until the zero-crossing signal is inputted to the counter 9, whereby the 2nd. counted value is obtained.

When the 1st. and the 2nd. counted values are obtained, these values are transmitted to the clad thickness calculator 19. The clad thickness calculator 19 calculates the difference between the 1st. and the 2nd. counted values, and transmits the calculated value to the sonic velocity calculator 20. The sonic velocity calculator 20 calculates the thickness of the clad metal 2 by multipliing the difference by the sonic velocity of the clad metal and the calculated thickness is transmitted to the display 21 wherein the clad thickness is displayed.

As explained above embodiment, the output of the double crystal angle probe 3 is amplified with the amplitude corresponding with the total echo B and the clad echo C in response to the time sharing signal. The parts of the amplified signal which corresponds with the B echo and the C echo are selected out by the gate selector 13. The peak values and the zero-crossing points of the selected output signals are detected. The times from the zero point to the receiving of the zero-crossing points of the total echo and the clad echo, or the times required to receive these echoes are calculated and the clad thickness is obtained. Hence the non-destructive measurement of the total thickness and the clad thickness can be carried out from the outer surface of the clad metal with respect to the total surface thereof with high efficiency, at inexpensive cost, and with high reliability.

Reference signs in the claims are intended for better understanding and shall not limit the scope.

## Claims

1. An apparatus for measuring the thickness of clad material, characterized by comprising:
   a transmitter crystal (3a) of a double crystal angle probe (3) for radiating an ultrasonic beam which contacts the top surface of a clad material consisting of a clad metal (2) and a mother metal (1) on top of said clad metal;
   a receiver crystal (3b) of said double crystal angle probe which contacts the top surface of said clad material for receiving a first echo (C) of said ultrasonic beam from the top surface of said clad metal and a second echo (B) thereof from the bottom surface of the clad metal;
   means for amplifying (5) of said first echo with a first amplitude, and of said second echo with a second amplitude;
   means for detecting (14) the time when the amplified signal of the first echo reaches the first zero-crossing point after the peak of the first echo and the time when the amplified signal of the the second echo reaches the first zero-crossing point after the peak of the second echo;
   means for determining (17) a zero point of time when the ultrasonic beam incides the top surface of the mother metal;
   means for calculating (9) a first period from said zero point to the first zero-crossing point of the first echo and a second period from the zero point to the first zero-crossing point of the second echo; and
   means for calculating (20) the thickness of the clad metal and the total thickness of the clad material using said first period and said second period.

2. An apparatus for measuring the thickness of clad material, characterized by comprising:
   a transmitter crystal (3a) of a double crystal angle probe (3) for radiating an ultrasonic beam which contacts the top surface of a clad material consisting of a clad metal (2) and a mother metal (1) on top of said clad metal for radiating an ultrasonic beam;
   a receiver crystal (3b) of said double crystal angle probe which contacts the top surface of said clad material for receiving a first echo (C) of said ultrasonic beam from the top surface of said clad metal and a second echo (B) thereof from the bottom surface of the clad metal;

means for time sharing (10) which generates a first time sharing signal when the first echo reaches said receiving crystal and a second time sharing signal when the second echo reaches the receiving crystal;

means for amplifying (5) of said first echo with a first amplitude, and of said second echo with a second amplitude, said first amplitude and said second amplitude being alternated upon receiving said first time sharing signal and said second time sharing signal, respectively;

means for gating (13) the amplified signal of the first echo and the amplified siganl of the second echo;

means for detecting (14) the time when the gated signal of the first echo reaches the first zero-crossing point after the peak of the first echo and the time when the gated signal of the second echo reaches the first zero-crossing point after the peak of the second echo;

means for determining (17) a zero point of time when the ultrasonic beam incides the top surface of the mother metal;

means for calculating (9) a first period from said zero point to the first zero crossing point of the first echo and a second period from the zero point to the first zero crossing point of the second echo; and

means for calculating (20) the thickness of the clad metal and the total thickness of the clad material using saidfirst period and said second period.

3. An apparatus for measuring the thickness of clad material of claim 1, characterized in that the clad material is a clad tube consisting of a mother tube and in the shape of a clad tube inserted in said mother tube.

4. An apparatus for measuring the thickness of clad material of claim 2, characterized in that the clad material is in the shape of a clad tube consisting of a mother tube and a clad tube inserted in said mother tube.

5. An apparatus for measuring the thickness of clad material of claim 3 or 4, characterized in that the clad material is a stainless steel and the mother material is a low carbon steel.

6. An apparatus for measuring the thickness of clad material of claim 3 or 4, characterized in that the clad material is a stainless steel and the mother material is a low alloy steel.

7. An apparatus for measuring the thickness of clad material of claim 3 or 4, characterized in that the clad material is a nickel base alloy and the mother material is a low carbon steel.

8. An apparatus for measuring the thickness of clad material of claim 3 or 4, characterized in that the clad material is a nickel base alloy and the mother material is a low alloy steel.

9. An apparatus for measuring the thickness of clad material of claim 3 or 4, characterized in that the clad material is a titanium base alloy and the mother material is a low carbon steel.

10. An apparatus for measuring the thickness of clad material of claim 3 or 4, characterized in that the clad material is a titanium base alloy and the mother material is a low alloy steel.

11. An apparatus for measuring the thickness of clad material of claim 2, characterized in that the materials of the transmitting crystal and the receiver crystal are zirconium titanate series porcelain.

12. An apparatus for measuring the thickness of clad material of claim 2, characterized in that the materials of the transmitting crystal and the receiver crystal are piezoelectric porcelain.

13. An apparatus for measuring the thickness of clad material of claim 2, characterized in that the material of the transmitting crystal is zirconium titanate series porcelain and that of the receiver crystal is piezoelectric porcelain.

14. An apparatus for measuring the thickness of clad material of claim 2, characterized in that the dimension of the crystal is 5 mm in height and 10 mm in width.

9

15. An apparatus for measuring the thickness of clad material of claim 2, characterized in that the dimension of the crystal is 10 mm in height and 10 mm in width.

16. An apparatus for measuring the thickness of clad material of claim 2, characterized in that the range of the frequency utilized in the transmitting crystal and the receiver crystal is from 2 to 10 MHz.

17. An apparatus for measuring the thickness of clad material of claim 2, characterized in that the coupling method for acousticaly coupling the probe with the measured body is the contact method.

18. An apparatus for measuring the thickness of clad material of claim 2, characterized in that the coupling method for acousticaly coupling the probe with the measured body is the water column coupling method.

19. An apparatus for measuring the thickness of clad material of claim 2, characterized in that the double crystal angle probe is stationary and the tube is spirally moved in the scanning.

20. An apparatus for measuring the thickness of clad material of claim 2, characterized in that the tube moves straight and the double crystal angle probe is rotated in the scanning.

FIG.1

# FIG.2A

# FIG.2B

# FIG.3

FIG. 4

OUTPUT OF
RECEIVING
OSCILLATOR

OUTPUT OF
RECEIVING
AMPLIFIER

TIME ⟶

Ta    Tb

T  C  B
T' C' B'
T  C  B
T" C" B"

EP 0 429 854 A1

# FIG.5

OUTPUT OF RECEIVING AMPLIFIER

T'  C'  B'  T"  C"  B"

ZERO POINT ADJUSTING

B-GATE

C-GATE

THICKNESS GATE

Sa  M  Sa  M

COUNT PERIOD OF 1ST COUNTER

COUNT PERIOD OF 2ND COUNTER

Ta  Tb

TIME

# FIG. 6

OUTPUT OF
RECEIVING
AMPLIFIER

T'
Sa
C'
B'

$Q_1$

COUNT
PERIOD

$Q_2$

$P_K$ M

TIME ⟶

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR - A1 - 2 629 586 (CEZUS) <br> * Abstract; page 2, lines 8-24; page 5, line 35 - page 6, line 8; page 7, line 6 - page 8, line 3; page 5, lines 10ff; fig. 1-4,7 * | 1-3, 16,18, 19,20 | G 01 B 17/02 |
| A | US - A - 4 669 310 (LESTER) <br> * Totality; especially column 2, line 52 - column 3, line 66; fig. 1,2 * | 1-3, 17 | |
| A | US - A - 4 334 433 (TAKAHASHI) <br> * Totality * | 1,2, 17 | |
| A | GB - A - 1 117 664 (GLASS DEVEL.) <br> * Totality * | 1,2, 11-13, 17 | **TECHNICAL FIELDS SEARCHED (Int. Cl.5)** |
| A | FR - A - 1 557 351 (HITACHI) <br> * Totality * | 1,2, 17,18, 19,20 | G 01 B 17/00 <br> G 01 N 29/00 |
| A | US - A - 4 307 611 (OPARA) <br> * Totality * | | |

The present search report has been drawn up for all claims

| Place of search | Date of completion of the search | Examiner |
|---|---|---|
| VIENNA | 11-03-1991 | TOMASELLI |